# EUROPEAN PATENT SPECIFICATION

(11) **EP 3 079 402 B1**
(45) Date of publication and mention of the grant of the patent: **01.08.2018**
(21) Application number: 14866861.9
(22) Date of filing: 05.06.2014
(51) Int. Cl.: H04W 36/18, H04W 36/00

(54) **INTER-CELL SOFT HANDOVER METHOD AND APPARATUS**
INTERZELLULÄRES SANFTES ÜBERGABEVERFAHREN UND VORRICHTUNG
APPAREIL ET PROCÉDÉ DE TRANSFERT PROGRESSIF ENTRE CELLULES

(30) Priority: 02.12.2013 CN 201310635030
(43) Date of publication of application: 12.10.2016
(73) Proprietor: ZTE Corporation, Shenzhen City, Guangdong 518057 (CN)
(72) Inventor: ZHAN, Jianming, Shenzhen Guangdong 518057 (CN)
(74) Representative: Novagraaf Technologies
(86) International application number: PCT/CN2014/079288
(87) International publication number: WO 2015/081676

(56) References cited:
- EP-A1- 1 499 147
- CN-A- 1 614 916
- CN-A- 1 878 419
- US-A1- 2010 216 456
- US-A1- 2011 183 676
- US-A1- 2013 182 657
- ERICSSON ET AL: "On Control Channel Robustness for Heterogeneous Networks", 3GPP DRAFT; R1-125223 ON CONTROL CHANNEL ROBUSTNESS FOR HETEROGENEOUS NETWORKS, 3RD GENERATION PARTNERSHIP PROJECT (3GPP), MOBILE COMPETENCE CENTRE ; 650, ROUTE DES LUCIOLES ; F-06921 SOPHIA-ANTIPOLIS , vol. RAN WG1, no. New Orleans, USA; 20121112 - 20121116 3 November 2012 (2012-11-03), XP050663080, Retrieved from the Internet: URL:http://www.3gpp.org/ftp/tsg_ran/WG1_RL 1/TSGR1_71/Docs/ [retrieved on 2012-11-03]
- "3rd Generation Partnership Project; Technical Specification Group Radio Access Network; Study on UMTS heterogeneous networks (Release 12)", 3GPP STANDARD; 3GPP TR 25.800, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. V1.0.2, 23 July 2013 (2013-07-23), pages 1-57, XP050712096, [retrieved on 2013-07-23]

## Description

### Technical Field

The disclosure relates to the field of improvement in performance of Universal Mobile Telecommunications System (UMTS) networks, and in particular to a method and device for inter-cell soft handover.

### Background

A UMTS is one of global 3rd-Generation (3G) standards formulated by the international standardization organization-3G Partnership Project (3GPP), and its main body includes a series of technical specifications and interface protocols such as a Code Division Multiple Access (CDMA) network and a packet core network.

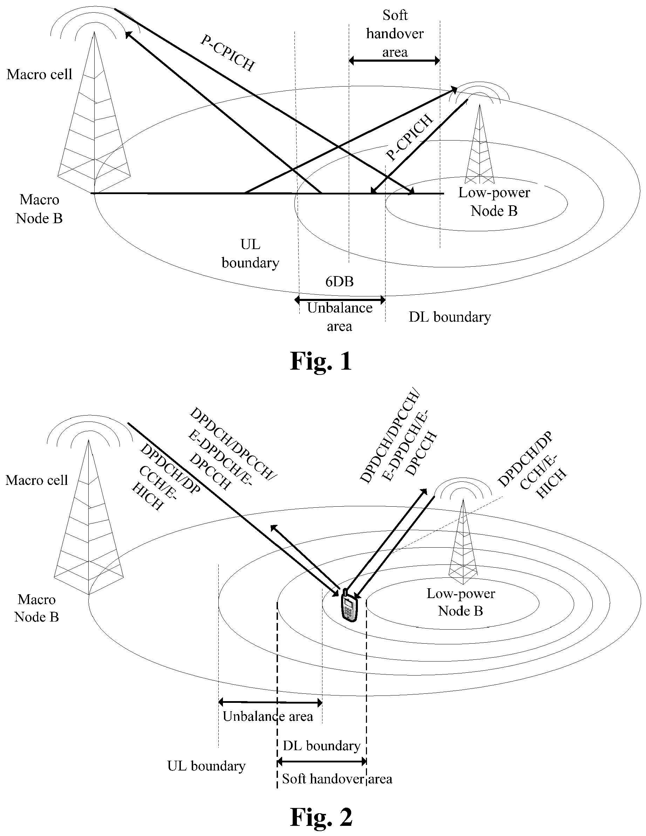

In a practical deployment of a UMTS heterogeneous network, DownLink (DL) coverage boundaries and UpLink (UL) coverage boundaries of a macro cell and a low-power cell are not located at the same place (that is, the UL boundaries and the DL boundaries are different), that is, there exists an UL and DL unbalance area; however, a soft handover process measurement report reported by a mobile phone is triggered to be reported by received DL signal strength; and therefore, there may be a difference between the UL and DL unbalance area and a soft handover area, referring to Fig. 1.

Such a difference may cause poor quality of an UL signal received by the macro cell from User Equipment (UE) in the soft handover area and waste of an UL resource of the macro cell, thereby influencing UL processing performance of the macro cell, referring to Fig. 2, and when more low-power cells are deployed in the macro cell, more UL processing resources may be wasted to finally cause reduction in performance of the macro cell.

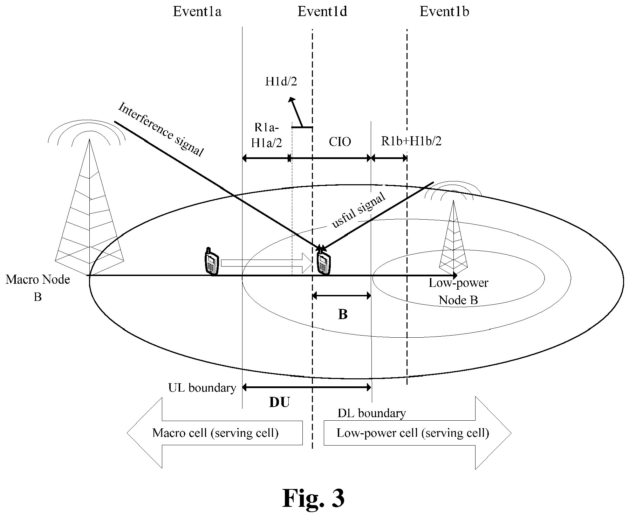

Such a difference may further cause UL interference of a user of the macro cell to the low-power cells, and in order to reduce such interference, a Cell Individual Offset (CIO) may be regulated to enable the handover area to cover the unbalance area according to a conventional method; and however, such a difference may cause DL interference of the macro cell to the UE in the soft handover area, referring to Fig. 3.

EP 1499147 A1, and ERICSSON ET AL:"On control channel robustness for heterogeneous networks", 3GPP DRAFT R1-125223 provide respective technical solutions; however, the above mentioned problem still remains unsolved.

### Summary

The present invention includes a method according to claim 1 and a radio network controller according to claim 5. The embodiments and/or examples of the following description which are not covered by the appended claims are considered as not being part of the present invention. The embodiment of the disclosure provides a method and implementation device for inter-cell soft handover, which avoid waste of a processing resource of a macro cell of a UMTS heterogeneous network, improve UL processing performance of the network and avoid DL interference of the macro cell caused by CIO regulation.

In order to solve the above technical problem, the embodiment of the disclosure provides a method for inter-cell soft handover, which may include that:
a control message at least including multiple events of intra-frequency measurement control and their corresponding parameters is sent to UE;
measured event reports, reported by the UE, of the multiple events are received; and
a soft handover process is executed according to the multiple measured event reports.

Preferably, the control message may further include: a CIO of an adjacent low-power cell of a macro cell.

The multiple events may be set by setting Information Element (IE) values in the intra-frequency measurement reporting criteria to be different values, which are Event1a, Event1d and Event1b, respectively.

When handover from the macro cell to the low-power cell is implemented, a reporting range constant R1a and delay parameter H1a of Event1a may be set to be the same as parameters between macro cells; and a use CIO of Event1d may be set to be TRUE, and a delay parameter H1d may be the same as a parameter between the macro cells.

Preferably, the step that the soft handover process may be executed according to the multiple measured event reports may comprise:
the measured event report of Event1a is received;
Radio Link (RL) setup is initiated to the low-power cell, active set update is initiated to the UE, and the low-power cell is added into an active set;
the measured event report of Event1d is received;
Event1b and the corresponding parameters are sent to the UE;
the measured event report of Event1b is received;
RL reconfiguration is initiated to the macro cell and the low-power cell, and physical channel reconfiguration and radio bearer reconfiguration are initiated to the UE;
active set update is initiated to the UE, an ID of the macro cell is deleted from the active set, and RL deletion is initiated to the macro cell; and

Event1a and the corresponding parameters are sent to the UE to implement soft handover.

In the soft handover process, a reporting range constant R1b=0 and delay parameter H1b=0∼2dB corresponding to Event1b may be sent to the UE, and a reporting range constant R1a=0 and delay parameter H1a=0∼2dB corresponding to Event1a may be sent to the UE.

Preferably, when handover from the low-power cell to the macro cell is implemented, the reporting range constant R1a may be 0, and the delay parameter H1a may be 0∼2dB; the use CIO of Event1d may be set to be TRUE, and the delay parameter H1d may be the same as a parameter between the macro cells; and a reporting range constant R1b of Event1b is A+(R1a-H1a/2) and a delay parameter H1b is 0, wherein a magnitude of A may be regulated, and R1a and H1a are soft handover parameters between a macro cell and a macro cell.

The step that the soft handover process may be executed according to the multiple measured event reports comprises:
the measured event report of Event1a is received;
RL Setup is initiated to the macro cell, active set update is initiated to the UE, and the macro cell is added into the active set;
RL reconfiguration is initiated to the macro cell and the low-power cell, and physical channel reconfiguration and radio bearer reconfiguration are initiated to the UE;
the measured event report of Event1d is received, and the measured event report is not processed;
the measured event report of Event1b is received; and
active set update is initiated to the UE, the ID of the low-power cell is deleted from the active set, and RL deletion is initiated to the low-power cell to implement soft handover.

The embodiment of the disclosure further provides a device for implementing inter-cell soft handover, which may include:
a sending component configured to send a control message at least including multiple events of intra-frequency measurement control and their corresponding parameters to UE;
a receiving component configured to receive measured event reports, reported by the UE, of the multiple events; and
an execution component configured to execute a soft handover process according to the multiple measured event reports.

The control message may further include: a CIO of an adjacent low-power cell of a macro cell.

The technical solutions of the embodiment of the disclosure at least have the following beneficial effects:
in the inter-cell soft handover method of the embodiment of the disclosure, the soft handover process is redefined on the basis of the three soft handover event measurement reports, so that waste of the processing resource of the macro cell of the UMTS heterogeneous network is avoided, the UL processing performance of the network is improved, and an lub transmission bandwidth of the macro cell is saved; and in addition, DL interference of the macro cell caused by CIO regulation is avoided.

### Brief Description of the Drawings

Fig. 1 shows a diagram of UL and DL unbalance of a UMTS heterogeneous network;
Fig. 2 shows a diagram of UL and DL channels between UE in a soft handover area of which an E-DCH serving cell is a low-power cell and each of a macro cell and a low-power cell;
Fig. 3 shows a diagram of interference of a DL signal from a macro cell to UE in a soft handover area;
Fig. 4 shows a diagram of a soft handover event and soft handover area in a process of movement of UE from a macro cell to a low-power cell;
Fig. 5 shows a diagram of a soft handover event and soft handover area in a process of movement of UE from a low-power cell to a macro cell;
Fig. 6 shows a flowchart of processing soft handover event Event1a in a process of movement of UE from a macro cell to a low-power cell;
Fig. 7 shows a flowchart of processing soft handover event Event1d in a process of movement of UE from a macro cell to a low-power cell;
Fig. 8 shows a flowchart of processing soft handover event Event1b in a process of movement of UE from a macro cell to a low-power cell;
Fig. 9 shows a flowchart of processing soft handover event Event1a in a process of movement of UE from a low-power cell to a macro cell;
Fig. 10 shows a flowchart of processing soft handover event Event1d in a process of movement of UE from a low-power cell to a macro cell;
Fig. 11 shows a flowchart of processing soft handover event Event1b in a process of movement of UE from a low-power cell to a macro cell;
Fig. 12 shows a diagram of an UL and DL service connecting relationship when a serving cell shows a macro cell in a process of movement of UE from the macro cell to a low-power cell;
Fig. 13 shows a diagram of an UL and DL service connecting relationship in an unbalance area in a process of movement of UE from a macro cell to a low-power cell;
Fig. 14 shows a diagram of an UL and DL service connecting relationship in a soft handover area in a process of movement of UE from a macro cell to a low-power cell;
Fig. 15 shows a diagram of an UL and DL service connecting relationship when a serving cell shows a low-power cell in a process of movement of UE from a macro cell to the low-power cell;
Fig. 16 shows a diagram of an UL and DL service connecting relationship when a serving cell is a low-power cell in a process of movement of UE from the low-power cell to a macro cell;
Fig. 17 shows a diagram of an UL and DL service connecting relationship in a soft handover area in a process of movement of UE from a low-power cell to a macro cell;
Fig. 18 shows a diagram of an UL and DL service connecting relationship in an unbalance area in a process of movement of UE from a low-power cell to a macro cell;
Fig. 19 shows a diagram of an UL and DL service connecting relationship when a serving cell is a macro cell in a process of movement of UE from a low-power cell to the macro cell; and
Fig. 20 shows a flowchart of basic steps of an inter-cell soft handover method according to an embodiment of the disclosure.

### Detailed Description of the Embodiments

In order to make the technical problem to be solved, technical solutions and advantages of the embodiment of the disclosure clearer, detailed descriptions will be made below with reference to the drawings and specific embodiments.

The embodiment of the disclosure provides a method and device for inter-cell soft handover, so as to solve the problem of macro cell performance reduction caused by waste of an UL resource of a macro cell in the conventional art. A soft handover process is redefined on the basis of three soft handover event measurement reports, so that waste of a processing resource of a macro cell of a UMTS heterogeneous network is avoided, UL processing performance of the network is improved, and an lub transmission bandwidth of the macro cell is saved; and in addition, DL interference of the macro cell caused by CIO regulation of a low-power cell is avoided.

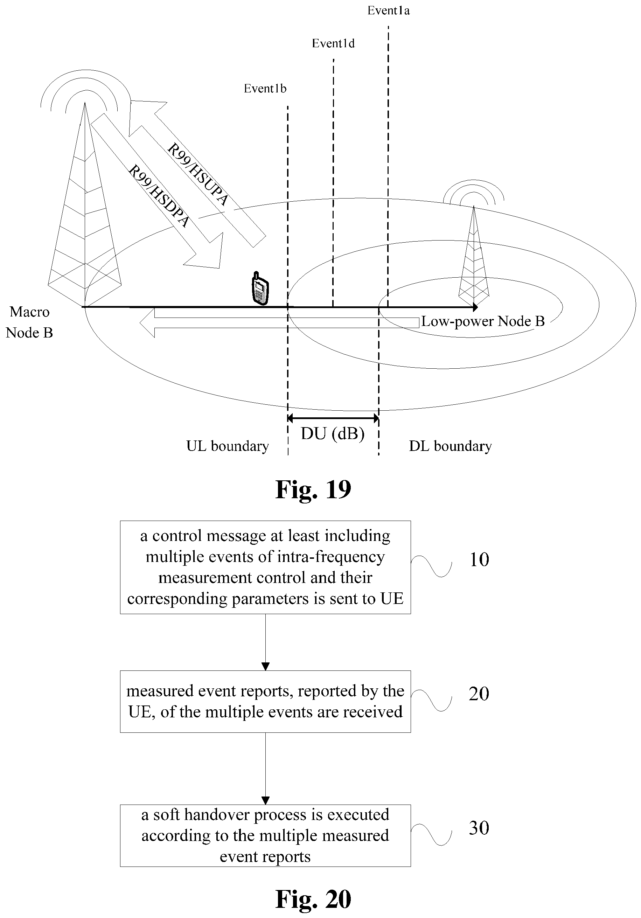

As shown in Fig. 20, the embodiment of the disclosure provides a method for inter-cell soft handover, which includes:
Step 10: a control message at least including multiple events of intra-frequency measurement control and their corresponding parameters is sent to UE;
Step 20: measured event reports, reported by the UE, of the multiple events are received; and
Step 30: a soft handover process is executed according to the multiple measured event reports.

In the embodiment of the disclosure, the intra-frequency measurement control sent to the UE includes configuration information of the multiple events, and then link addition, active set update, link deletion, link replacement and serving cell changing operations are implemented to implement the soft handover process according to the measurement reports, reported by the UE, of the multiple events, so that waste of a processing resource of a macro cell of a UMTS heterogeneous network is avoided, and UL processing performance of the network is improved.

The control message in the embodiment of the disclosure further includes: a CIO of an adjacent cell of the macro cell.

In the embodiment of the disclosure, setting of the CIO may enable a handover area to cover an unbalance area, but may also cause UL interference of the macro cell to the UE in the soft handover area; and in order to avoid the interference, the CIO of the adjacent low-power node of the macro cell is set to be CIO=DU-(R1a-H1a/2)dB in a process of handover of the UE from the macro cell to the low-power cell in the embodiment of the disclosure, wherein DU is a size of the unbalance area, and its value is ranged from 4 to 7dB. The value of DU may be determined according to a practical transmitted power difference and receiving sensitivity difference of the macro cell and the low-power cell in the UMTS heterogeneous network, and is not limited to a fixed value. In general, R1a-H1a/2<DU(dB), and for example, when the size DU of the unbalance area is 6dB, CIO=6-(R1a-H1a/2). When measurement report parameters R1a and H1a of conventional Event1a are 3dB and 0dB respectively, the CIO is 3dB.

In the embodiment of the disclosure, the CIO of the adjacent macro cell of the low-power cell is set to be 0dB in a process of handover of the UE from the low-power cell to the macro cell.

In the embodiment of the disclosure, the multiple events are set by setting IE values in the intra-frequency measurement reporting criteria to be different values. For example, measured events Event1a, Event1d and Event1b are set respectively.

In the embodiment of the disclosure, the soft handover process is implemented by the three measured event reports of Event1a, Event1d and Event1b, so that an lub transmission bandwidth of the macro cell is saved, waste of a processing resource of the macro cell of the UMTS heterogeneous network is avoided, and UL processing performance of the network is improved.

Preferably, in the embodiment of the disclosure, when handover from the macro cell to the low-power cell is implemented, a reporting range constant R1a and delay parameter H1a of Event1a are set to be the same as parameters between macro cells; a use CIO of Event1d is set to be TRUE, and a delay parameter H1d is set to be the same as the parameter between the macro cells.

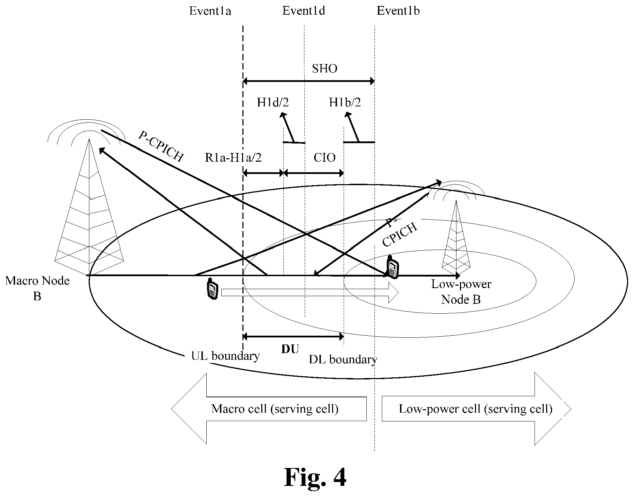

In the embodiment of the disclosure, as shown in Fig. 4, the three measured event reports of Event1a, Event1d and Event1b are generated in the process of handover of the UE from the macro cell to the low-power cell. Preferably, Step 30 specifically includes the following steps:
Step 301: the measured event report of Event1a is received;
Step 302: RL Setup is initiated to the low-power cell, active set update is initiated to the UE, and the low-power cell is added into an active set;
Step 303: the measured event report of Event1d is received;
Step 304: Event1b and a corresponding parameter are sent to the UE;
Step 305: the measured event report of Event1b is received;
Step 306: RL reconfiguration is initiated to the macro cell and the low-power cell, and physical channel reconfiguration and radio bearer reconfiguration are initiated to the UE;
Step 307: active set update is initiated to the UE, the macro cell is deleted from the active set, and RL deletion is initiated to the macro cell; and
Step 308: Event1a and a corresponding parameter are sent to the UE to implement soft handover.

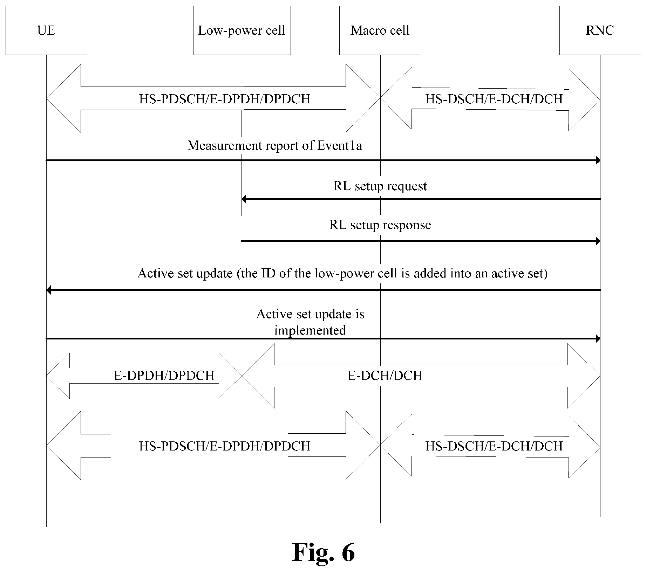

In the embodiment of the disclosure, as shown in Fig. 6, in Step 301 and Step 302, a Radio Network Controller (RNC) initiates an RL Setup process to the low-power cell after receiving the measurement report of Event1a, and then the RNC initiates an active set update process to the UE, and adds the low-power cell into the active set.

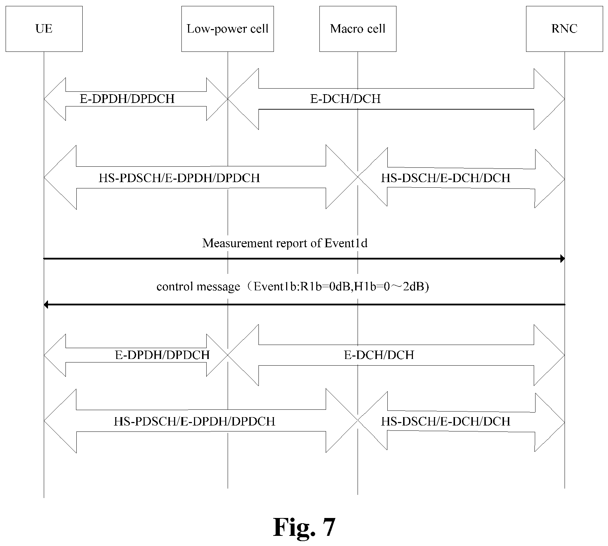

As shown in Fig. 7, in Step 303 and Step 304, the RNC does not initiate a High Speed-DL Shared Channel/Enhanced-Dedicated Channel (HS-DSCH/E-DCH) serving cell changing process after receiving the measurement report of Event1d, and an HS-DSCH serving cell of the UE is still the macro cell after Event1d, so that DL interference from the macro cell caused by changing of the HS-DSCH serving cell of the UE in the soft handover area into the low-power cell is avoided; the RNC sends the control message to the UE, IEs of intra-frequency measurement reporting criteria in the control message include an IE of which an intra-frequency event identity is equal to 1b, a corresponding reporting range constant R1b which is set to be 0 and a delay parameter H1b which is set to be 0∼2dB, so that the measurement report of Event1b is generated at a DL boundary point or within an H1b/2 delay range of the DL boundary point to the low-power cell; and compared with the condition that conventional R1 b is set to be more than 0, setting R1 b to be 0 is to delete the macro cell from the active set in advance, so that an RL processing load of the macro cell may be reduced, the UL processing resource of the macro cell may be saved, the UL processing performance may further be improved, and the lub transmission bandwidth of the macro cell is also saved.

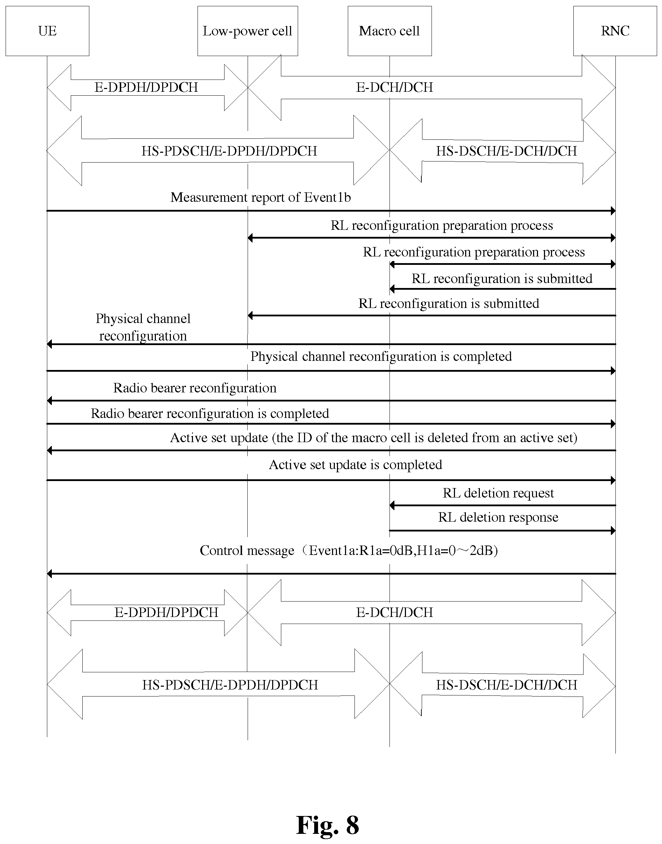

As shown in Fig. 8, in Step 305, 306, 307 and 308, after the RNC receives the measurement report of Event1b, the RNC implements HS-DSCH serving cell changing through an RL reconfiguration process initiated to the macro cell and the low-power cell and a physical channel reconfiguration process initiated to the UE, and implements E-DCH serving cell changing through radio bearer reconfiguration with the UE, so that the HS-DSCH serving cell is changed into the low-power cell, and the E-DCH serving cell is changed into the low-power cell. The RNC initiates an active set update process to the UE to delete the macro cell from the active set, the RNC initiates an RL deletion process to the macro cell, then the RNC sends a control message to the UE to implement the soft handover process, wherein IEs of the intra-frequency measurement reporting criteria in the control message include an IE of which an intra-frequency event identity is equal to 1a, a corresponding reporting range constant R1a is set to be 0 and a delay parameter H1b is set to be 0∼2dB, so that the measurement report of Event1a is generated at a DL boundary point or within an H1a/2 delay range of the DL boundary point to the low-power cell.

In the embodiment of the disclosure, when the UE moves from the macro cell to the low-power cell, in the soft handover process, a reporting range constant R1b=0 and delay parameter H1b=0∼2dB corresponding to Event1b are sent to the UE, and a reporting range constant R1a=0 and delay parameter H1a=0∼1dB corresponding to Event1a are sent to the UE.

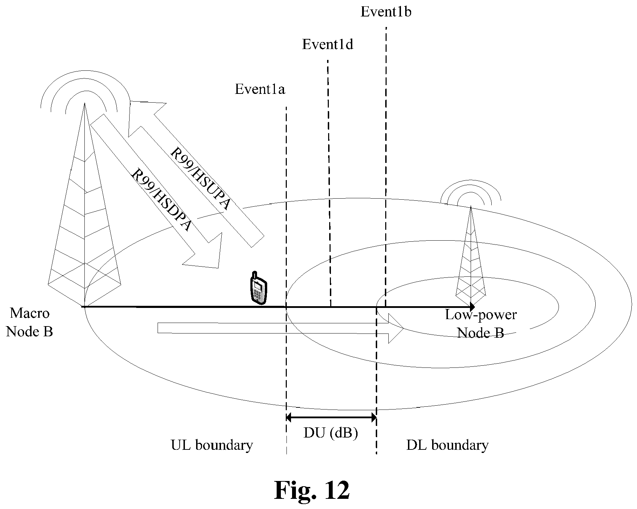

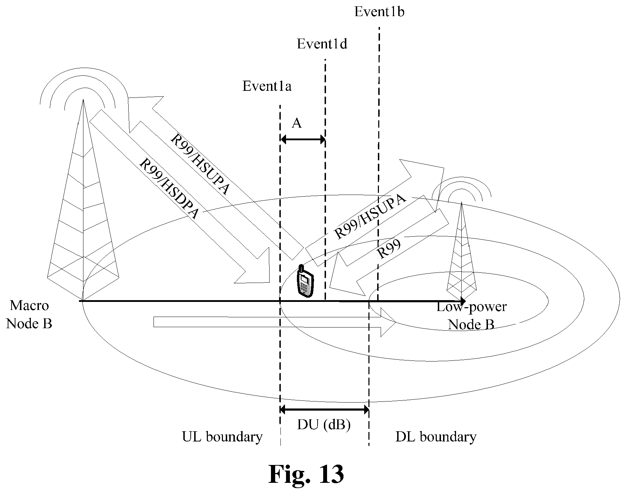

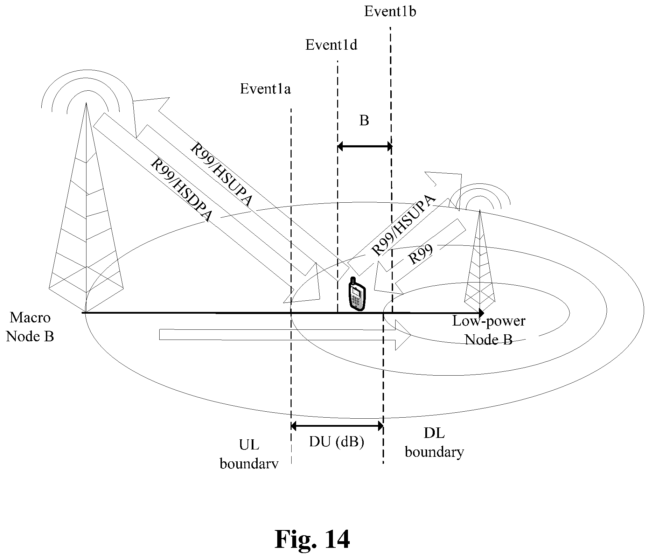

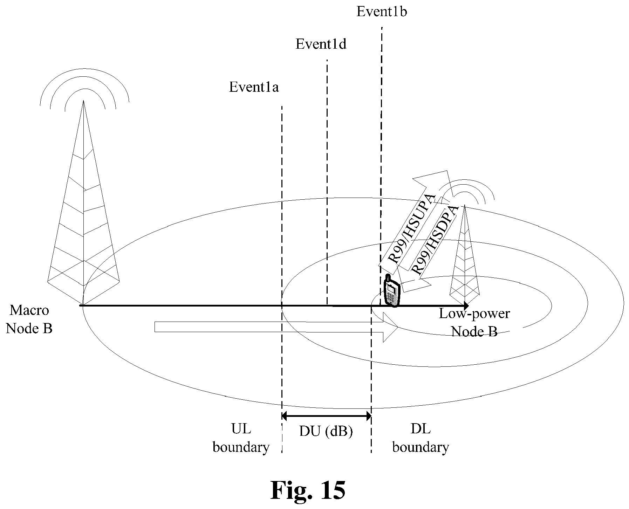

In the embodiment of the disclosure, an UL and DL service connecting relationship in a process of movement of the UE from the macro cell to the low-power cell is shown in Fig. 12, Fig. 13, Fig. 14 and Fig. 15.

In another embodiment of the disclosure, during handover from the low-power cell to the macro cell is implemented, the reporting range constant R1a of Event1a is 0 and the delay parameter H1a is 0∼2dB; the use CIO of Event1d is set to be TRUE, and the delay parameter H1d is the same as the parameter between the macro cells; and the reporting range constant R1b of Event1b is A+(R1a-H1a/2) and the delay parameter H1b is 0, wherein magnitude of A may be regulated, and R1a and H1a are soft handover parameters between a macro cell and a macro cell.

In the embodiment of the disclosure, the IEs of the intra-frequency measurement reporting criteria in the control message include an IE of which the intra-frequency event identity is equal to 1b, and correspondingly, the reporting range constant R1b of Event1b and the delay parameter H1b of Event1b are set to meet: R1b+H1b/2=A+(R1a-H1a/2), wherein the parameters R1a and H1a are the soft handover parameters between the macro cells, and a value range of A is 0∼6. For example, when A is 3, R1b+H1b/2=3+(R1a-H1a/2), wherein R1b=3+(R1a-H1a/2), and H1b=0(dB).

An A value which may be regulated is set to make it possible for the UE to locate in a macro diversity combining gain area of an UL as much as possible to generate a macro diversity combining gain for UL capacity in the process of movement of the UE from the low-power cell to the macro cell.

Preferably, the delay parameter H1d is the same as the parameter between the macro cells, and may be configured to be 1∼2dB to avoid a ping-pong effect of handover.

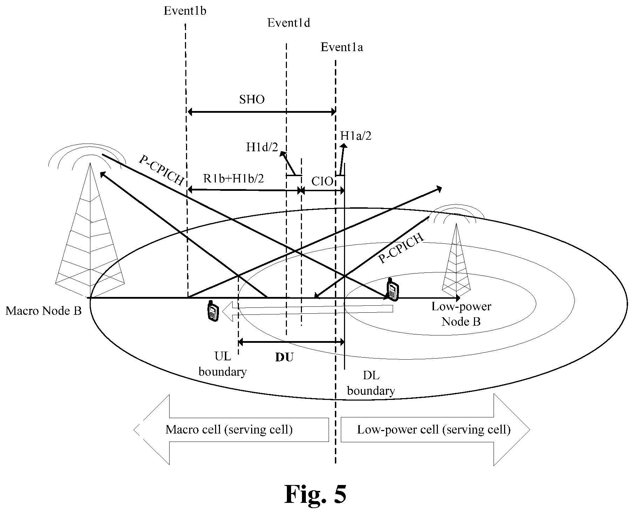

In the embodiment of the disclosure, as shown in Fig. 5, the three measured event reports of Event1a, Event1d and Event1b are generated in the process of movement of the UE from the low-power cell to the macro cell. Preferably, Step 30 specifically includes the following steps:
Step 311: the measured event report of Event1a is received;
Step 312: RL Setup is initiated to the macro cell, active set update is initiated to the UE, and the macro cell is added into the active set;
Step 313: RL reconfiguration is initiated to the macro cell and the low-power cell respectively, and physical channel reconfiguration and radio bearer reconfiguration are initiated to the UE;
Step 314: the measured event report of Event1d is received, and the measured event report is not processed;
Step 315: the measured event report of Event1b is received; and
Step 316: active set update is initiated to the UE, ID of the low-power cell is deleted from the active set, and RL deletion is initiated to the low-power cell to implement soft handover.

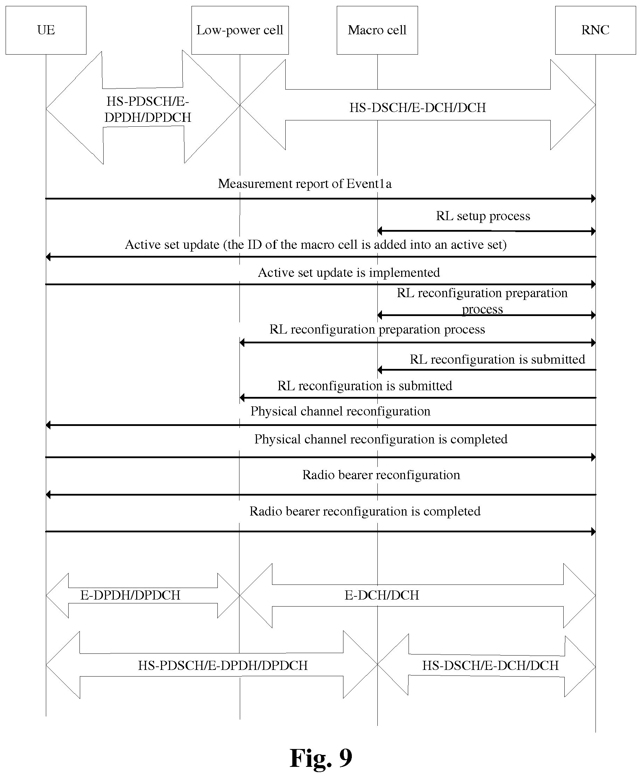

In the embodiment of the disclosure, as shown in Fig. 9, in Step 311, 312 and 313, the RNC initiates the RL set process to the macro cell after the RNC receives the measurement report of Event1a, then the RNC initiates the active set update process to the UE and adds an ID of the macro cell into the active set, and the RNC implements HS-DSCH serving cell changing through the RL reconfiguration process initiated to the macro cell and the low-power cell and the physical channel reconfiguration process initiated to the UE, and implements E-DCH serving cell changing through a radio bearer reconfiguration process with the UE, so that the HS-DSCH serving cell is changed into the macro cell, and the E-DCH serving cell is changed into the macro cell. The HS-DSCH serving cell of the UE is changed into the macro cell after Event1a, so that DL interference of the macro cell under the condition that the HS-DSCH serving cell of the UE in the handover area is the low-power cell is avoided; during handover from the low-power cell to the macro cell, setting R1a in the parameters of Event1a to be 0 is to delay addition of the ID of the macro cell into the active set compared with the condition that conventional R1b is more than 0, so that the RL processing load of the macro cell may be reduced, the UL processing resource of the macro cell may be saved, the UL processing performance may further be improved, and the lub transmission bandwidth of the macro cell is also saved.

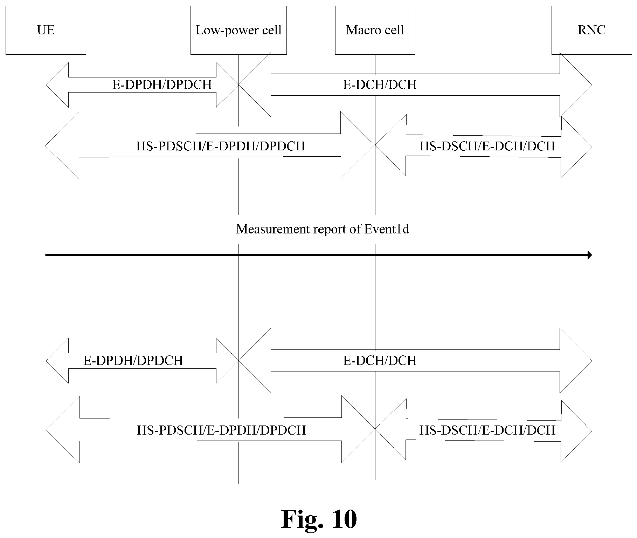

As shown in Fig. 10, in Step 314, the RNC does not initiate the HS-DSCH/E-DCH serving cell changing process after receiving the measurement report of Event1d (the RNC has implemented the HS-DSCH/E-DCH serving cell changing process after receiving Event1a).

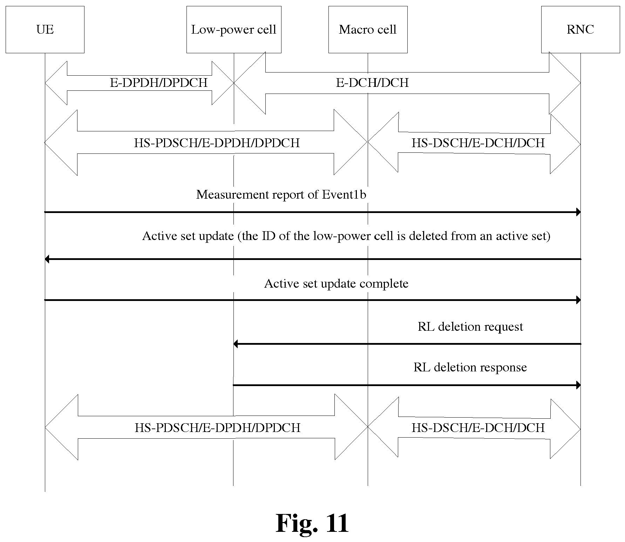

As shown in Fig. 11, in Step 315 and Step 316, the RNC initiates the active set update process and deletes the ID of the low-power cell from the active set after receiving the measurement report of Event1b, and then the RNC initiates the RL deletion process to the low-power cell to implement the soft handover process.

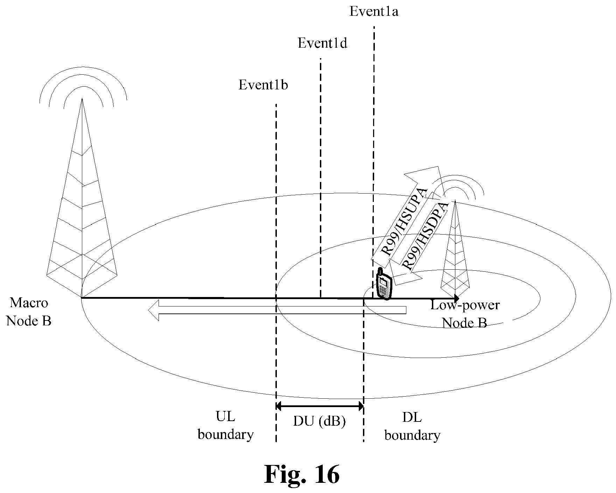

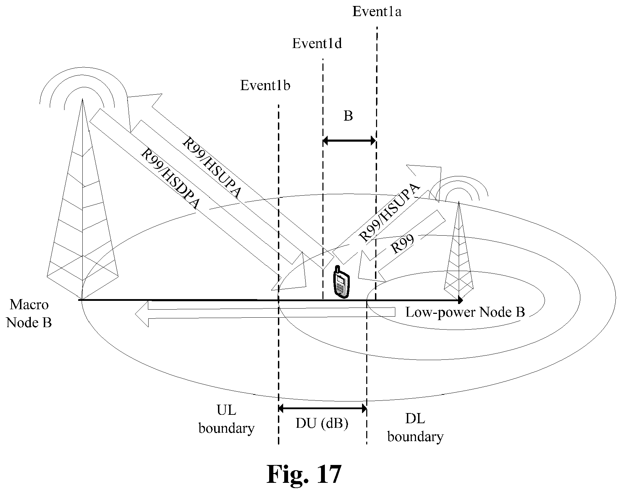

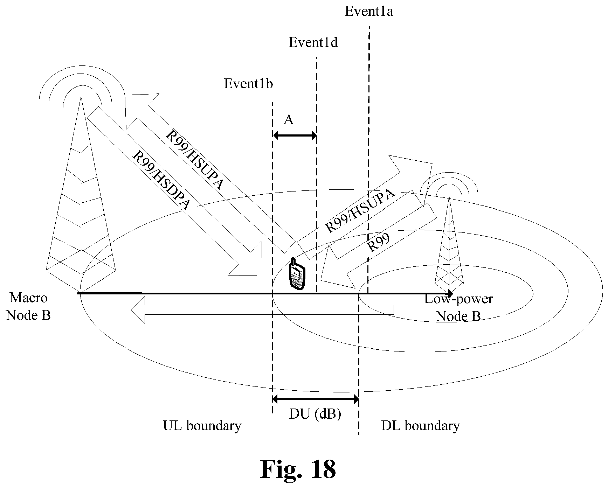

In the embodiment of the disclosure, an UL and DL service connecting relationship in a process of movement of the UE from the low-power cell to the macro cell is shown in Fig. 16, Fig. 17, Fig. 18 and Fig. 19.

The embodiment of the disclosure further provides a device for implementing inter-cell soft handover, which includes:
a sending component configured to send a control message at least including multiple events of the intra-frequency measurement control and their corresponding parameters to UE;
a receiving component configured to receive measured event reports, reported by the UE, of the multiple events; and
an execution component configured to execute a soft handover process according to the received multiple measured event reports.

The control message further includes: a CIO of an adjacent low-power cell of a macro cell.

In the embodiment of the disclosure, the device for implementing inter-cell soft handover is equivalent to network-side equipment such as an RNC. In the method for inter-cell soft handover provided by the embodiment of the disclosure, the soft handover process is redefined on the basis of the three soft handover event measurement reports, so that waste of the processing resource of the macro cell of the UMTS heterogeneous network is avoided, the UL processing performance of the network is improved, and the lub transmission bandwidth of the macro cell is saved; and in addition, DL interference of the macro cell caused by CIO regulation is avoided.

### Industrial Applicability

As mentioned above, the method and implementation device for inter-cell soft handover provided by the embodiments of the disclosure have the following beneficial effects: the soft handover process is redefined on the basis of the three soft handover event measurement reports, so that waste of the processing resource of the macro cell of the UMTS heterogeneous network is avoided, the UL processing performance of the network is improved, and the lub transmission bandwidth of the macro cell is saved; and in addition, DL interference of the macro cell caused by CIO regulation is avoided.

## Claims

1. A method for inter-cell soft handover between a macro cell and a low-power cell, performed by a radio network controller, comprising:
sending (10) a control message at least comprising multiple events of intra-frequency measurement control and corresponding parameters of the each of the multiple events to User Equipment UE, wherein the multiple events are set by setting Information Element, IE, values in intra-frequency measurement reporting criteria to be different values, and the multiple events comprise Event 1a, Event 1d and Event 1b;
receiving (20) measured event reports, reported by the UE, of the multiple events; executing (30) a soft handover process according to the received multiple measured event reports, wherein the soft handover process comprises a soft handover from a macro cell to a low-power cell or a soft handover from a low-power cell to a macro cell ;
**characterized in that** executing the soft handover process from the macro cell to the low-power cell comprises:
receiving the measured event report of the Event 1a;
initiating Radio Link, RL, Setup to the low-power cell, initiating active set update to the UE, and adding an identity, ID, of the low-power cell into an active set;
receiving the measured event report of the Event 1d;
sending the Event 1b and the corresponding parameters to the UE;
receiving the measured event report of the Event 1b; after receiving the measured event report of the Event 1b, initiating RL reconfiguration to the macro cell and the low-power cell respectively, and initiating physical channel reconfiguration to the UE, and implementing High Speed-DL Shared Channel, HS-DSCH, serving cell changing, and initiating radio bearer reconfiguration to the UE, and implementing Enhanced-Dedicated Channel, E-DCH, serving cell changing;
initiating active set update to the UE, deleting an ID of the macro cell from the active set, and initiating RL deletion to the macro cell; and
sending the Event 1a and the corresponding parameters to the UE to implement soft handover; and **in that** executing the soft handover process from the low-power cell to the macro cell comprises:
receiving the measured event report of the Event 1a;
initiating RL Setup to the macro cell, initiating active set update to the UE, and adding the ID of the macro cell into the active set;
after receiving the measured event report of the Event 1a, initiating RL reconfiguration to the macro cell and the low-power cell respectively, and initiating physical channel reconfiguration to the UE, and implementing the HS-DSCH serving cell changing, and initiating radio bearer reconfiguration to the UE, and implementing the E-DCH serving cell changing;
receiving the measured event report of the Event 1d, and not processing the received measured event report;
receiving the measured event report of the Event 1b; and
initiating active set update to the UE, deleting an ID of the low-power cell from the active set, and initiating RL deletion to the low-power cell to implement soft handover.

2. The method for inter-cell soft handover according to claim 1, wherein when handover from the macro cell to the low-power cell is implemented, a reporting range constant R1a and a delay parameter H1a of the Event1a are set to be the same as parameters of a soft handover between macro cells; and a parameter Use CIO of the Event1d is set to be TRUE, and a delay parameter H1d is the same as a delay parameter of a soft handover between the macro cells.

3. The method for inter-cell soft handover according to claim 2, wherein in the soft handover process from the macro cell to the low-power cell, a reporting range constant R1b=0 and delay parameter H1b=0∼2dB corresponding to the Event1b are sent to the UE, and a reporting range constant R1a=0 and delay parameter H1a=0∼2dB corresponding to the Event1a are sent to the UE.

4. The method for inter-cell soft handover according to claim 1, wherein when handover from the low-power cell to the macro cell is implemented, the reporting range constant R1a of the Event1a is 0, and the delay parameter H1a of the Event1a is 0∼2dB; a parameter Use CIO of the Event1d is set to be TRUE, and the delay parameter H1d of the Event1d is the same as a parameter of a soft handover between the macro cells; and a reporting range constant R1b of the Event1b is A+(R1a-H1a/2) and a delay parameter H1b of the Event1b is 0, wherein a magnitude of A is regulated, and R1a and H1a are soft handover parameters between a macro cell and a macro cell.

5. A radio network controller for implementing inter-cell soft handover between a macro cell and a low-power cell, comprising:
a sending component configured to send a control message at least comprising multiple events of intra-frequency measurement control and corresponding parameters of each of the multiple events to User Equipment, UE, wherein the multiple events are set by setting Information Element, IE, values in intra-frequency measurement reporting criteria to be different values, and the multiple events comprise Event 1a, Event 1d and Event 1b;
a receiving component configured to receive measured event reports, reported by the UE, of the multiple events; and
an execution component configured to execute a soft handover process according to the received multiple measured event reports, wherein the soft handover process comprises a soft handover from a macro cell to a low-power cell or a soft handover from a low-power cell to a macro cell; **characterized in that** when the soft handover from a macro cell to a low-power cell is executed, the radio network controller is configured to :
receive the measured event report of the Event 1a;
initiate Radio Link, RL, Setup to the low-power cell, initiating active set update to the UE, and add an identity, ID, of the low-power cell into an active set;
receive the measured event report of the Event 1d;
send the Event 1b and the corresponding parameters to the UE;
receive the measured event report of the Event 1b; after receiving the measured event report of the Event 1b, initiate RL reconfiguration to the macro cell and the low-power cell respectively, and initiate physical channel reconfiguration to the UE, and implement High Speed-DL Shared Channel, HS-DSCH, serving cell changing, and initiate radio bearer reconfiguration to the UE, and implement Enhanced-Dedicated Channel, E-DCH, serving cell changing;
initiate active set update to the UE, deleting an ID of the macro cell from the active set, and initiate RL deletion to the macro cell; and
send the Event 1a and the corresponding parameters to the UE to implement soft handover;
when the soft handover from a low-power cell to a macro cell is executed, the radio network controller is configured to:
receive the measured event report of the Event 1a;
initiate RL Setup to the macro cell, initiate active set update to the UE, and add the ID of the macro cell into the active set;
after receiving the measured event report of the Event 1a, initiate RL reconfiguration to the macro cell and the low-power cell respectively, and initiate physical channel reconfiguration to the UE, and implement the HS-DSCH serving cell changing, and initiate radio bearer reconfiguration to the UE, and implement the E-DCH serving cell changing;
receive the measured event report of the Event 1d, and not process the received measured event report;
receive the measured event report of the Event 1b; and
initiate active set update to the UE, delete an ID of the low-power cell from the active set, and initiate RL deletion to the low-power cell to implement soft handover.

## Patentansprüche

1. Verfahren für interzelluläre sanfte Übergabe zwischen einer Makrozelle und einer energieeffizienten Zelle, welches mittels einer Funknetzsteuerung durchgeführt wird, umfassend:
Senden (10) einer Steuerungsnachricht, welche zumindest mehrere Ereignisse von Intrafrequenzmesssteuerung und zugehörige Parameter von jedem der mehreren Ereignisse umfasst, an eine Benutzereinrichtung, UE, wobei die mehreren Ereignisse mittels Festlegen von Werten von Informationselementen, IE, in Meldungskriterien für Intrafrequenzmessung als unterschiedliche Werte festgelegt werden, und die mehreren Ereignisse Ereignis 1a, Ereignis 1d und Ereignis 1b umfassen;
Empfangen (20) von gemessenen Ereignismeldungen, welche mittels der UE von den mehreren Ereignisse gemeldet werden; und
Ausführen (30) eines sanften Übergabeprozesses entsprechend den empfangenen mehreren gemessenen Ereignismeldungen, wobei der sanfte Übergabeprozess eine sanfte Übergabe von einer Makrozelle an eine energieeffiziente Zelle oder eine sanfte Übergabe von einer energieeffizienten Zelle an eine Makrozelle umfasst;
**dadurch gekennzeichnet, dass** Ausführen des sanften Übergabeprozesses von der Makrozelle an die energieeffiziente Zelle umfasst:
Empfangen der gemessenen Ereignismeldung von dem Ereignis 1a;
Einleiten der Einrichtung einer Funkstrecke, RL, zu der energieeffizienten Zelle, Einleiten einer Aktualisierung des aktiven Satzes zu der UE, und Hinzufügen einer Identität, ID, der energieeffizienten Zelle in einen aktiven Satz;
Empfangen der gemessenen Ereignismeldung von dem Ereignis 1d;
Senden des Ereignisses 1b und der zugehörigen Parameter an die UE;
Empfangen der gemessenen Ereignismeldung von dem Ereignis 1b;
nach dem Empfangen der gemessenen Ereignismeldung von dem Ereignis 1b, Einleiten einer RL-Neukonfiguration zu der Makrozelle bzw. der energieeffizienten Zelle, und Einleiten einer Neukonfiguration des physikalischen Kanals zu der UE, und Implementieren einer Änderung der bedienenden Zelle für gemeinsamen Hochgeschwindigkeits-Downlink-Kanal, HS-DSCH, und Einleiten einer Neukonfiguration des Funkträgers zu der UE, und Implementieren einer Änderung der bedienenden Zelle für erweiterten dezidierten Kanal, E-DCH;
Einleiten einer Aktualisierung des aktiven Satzes zu der UE, Löschen einer ID der Makrozelle aus dem aktiven Satz, und Einleiten von RL-Löschen zu der Makrozelle; und
Senden des Ereignisses 1a und der zugehörigen Parameter an die UE, um eine sanfte Übergabe zu implementieren;
und dadurch, dass Ausführen des sanften Übergabeprozesses von der energieeffizienten Zelle an die Makrozelle umfasst:
Empfangen der gemessenen Ereignismeldung von dem Ereignis 1a;
Einleiten von RL-Einrichtung zu der Makrozelle, Einleiten einer Aktualisierung des aktiven Satzes zu der UE, und Hinzufügen der ID der Makrozelle in den aktiven Satz;
nach dem Empfangen der gemessenen Ereignismeldung von dem Ereignis 1a, Einleiten einer RL-Neukonfiguration der Makrozelle bzw. der energieeffizienten Zelle und Einleiten einer Neukonfiguration des physikalischen Kanals zu der UE, und Implementieren einer Änderung der bedienenden HS-DSCH-Zelle, und Einleiten einer Neukonfiguration des Funkträger zu der UE, und Implementieren einer Änderung der bedienenden E-DCH-Zelle;
Empfangen der gemessenen Ereignismeldung von dem Ereignis 1d, und Nichtverarbeiten der empfangenen gemessenen Ereignismeldung;
Empfangen der gemessenen Ereignismeldung von dem Ereignis 1b; und
Einleiten einer Aktualisierung des aktiven Satzes zu der UE, Löschen einer ID der energieeffizienten Zelle aus dem aktiven Satz, und Einleiten von RL-Löschen zu der energieeffizienten Zelle, um die sanfte Übergabe zu implementieren.

2. Verfahren für interzelluläre sanfte Übergabe nach Anspruch 1, wobei, wenn die Übergabe von der Makrozelle an die energieeffiziente Zelle implementiert ist, eine Meldungsbereichskonstante R1a und ein Verzögerungsparameter H1a des Ereignisses 1a als dieselben wie Parameter einer sanften Übergabe zwischen Makrozellen festgelegt werden; und ein Parameter Use CIO des Ereignisses 1d als WAHR festgelegt wird, und ein Verzögerungsparameter H1d derselbe wie ein Verzögerungsparameter einer sanften Übergabe zwischen den Makrozellen ist.

3. Verfahren für interzelluläre sanfte Übergabe nach Anspruch 2, wobei in dem sanften Übergabeprozess von der Makrozelle an die energieeffiziente Zelle eine Meldungsbereichskonstante R1b=0 und ein Verzögerungsparameter H1b=0∼2dB, entsprechend dem Ereignis 1b, an die UE gesendet werden, und eine Meldungsbereichskonstante R1a=0 und ein Verzögerungsparameter H1a=0∼2dB, entsprechend dem Ereignis 1a, an die UE gesendet werden.

4. Verfahren für interzelluläre sanfte Übergabe nach Anspruch 1, wobei, wenn eine Übergabe von der energieeffizienten Zelle an die Makrozelle implementiert ist, die Meldungsbereichskonstante R1a des Ereignisses 1a gleich 0 ist, und der Verzögerungsparameter H1a des Ereignisses 1a gleich 0∼2dB ist; ein Parameter Use CIO des Ereignisses 1d als WAHR festgelegt ist, und der Verzögerungsparameter H1d des Ereignisses 1d derselbe wie ein Parameter einer sanften Übergabe zwischen den Makrozellen ist; und eine Meldungsbereichskonstante R1b des Ereignisses 1b gleich A+(R1a-H1a/2) ist und ein Verzögerungsparameter H1b des Ereignisses 1b gleich 0 ist, wobei eine Größenordnung von A geregelt wird, und R1a und H1a sanfte Übergabeparameter zwischen einer Makrozelle und einer Makrozelle sind.

5. Funknetzsteuerung zur Implementierung einer interzellulären sanften Übergabe zwischen einer Makrozelle und einer energieeffizienten Zelle, umfassend:
eine Sendekomponente, welche konfiguriert ist, eine Steuerungsnachricht zu senden, welche zumindest mehrere Ereignisse von Intrafrequenzmesssteuerung und zugehörige Parameter für jedes der mehreren Ereignisse umfasst, an Benutzereinrichtung, UE, wobei die mehreren Ereignisse mittels Festlegen von Werten von Informationselementen, IE, in Meldungskriterien für Intrafrequenzmessung als unterschiedliche Werte festgelegt werden, und die mehreren Ereignisse Ereignis 1a, Ereignis 1d und Ereignis 1b umfassen;
eine Empfangskomponente, welche konfiguriert ist, gemessene Ereignismeldungen zu empfangen, welche mittels der UE von den mehreren Ereignisse gemeldet werden; und
eine Ausführungseinheit, welche konfiguriert ist, einen sanften Übergabeprozess entsprechend den empfangenen mehreren gemessenen Ereignismeldungen auszuführen, wobei der sanfte Übergabeprozess eine sanfte Übergabe von einer Makrozelle an eine energieeffiziente Zelle oder eine sanfte Übergabe von einer energieeffizienten Zelle an eine Makrozelle umfasst; **dadurch gekennzeichnet, dass** wenn die sanfte Übergabe von einer Makrozelle an eine energieeffiziente Zelle ausgeführt wird, die Funknetzsteuerung konfiguriert ist, um:
die gemessene Ereignismeldung von dem Ereignis 1a zu empfangen;
Einrichtung einer Funkstrecke, RL, zu der energieeffizienten Zelle einzuleiten, Aktualisierung des aktiven Satzes zu der UE einzuleiten, und eine Identität, ID, der energieeffizienten Zelle in einen aktiven Satz hinzuzufügen;
die gemessene Ereignismeldung von dem Ereignis 1d zu empfangen;
das Ereignis 1b und die zugehörigen Parameter an die UE zu senden;
die gemessene Ereignismeldung von dem Ereignis 1b zu empfangen;
nach dem Empfangen der gemessenen Ereignismeldung von dem Ereignis 1b, RL-Neukonfiguration zu der Makrozelle bzw. der energieeffizienten Zelle einzuleiten und Neukonfiguration des physikalischen Kanals zu der UE einzuleiten, und Änderung der bedienenden Zelle für gemeinsamen Hochgeschwindigkeits-Downlink-Kanal, HS-DSCH, zu implementieren und Neukonfiguration des Funkträgers zu der UE einzuleiten, und Änderung der bedienenden Zelle für erweiterten dezidierten Kanal, E-DCH, zu implementieren;
Aktualisierung des aktiven Satzes zu der UE einzuleiten, eine ID der Makrozelle aus dem aktiven Satz zu löschen, und RL-Löschen zu der Makrozelle einzuleiten; und
das Ereignis 1a und die zugehörigen Parameter an die UE zu senden, um eine sanfte Übergabe zu implementieren;
wenn die sanfte Übergabe von einer energieeffizienten Zelle an eine Makrozelle ausgeführt wird, die Ereignismeldung der Funknetzsteuerung konfiguriert ist, um:
die gemessene Ereignismeldung von dem Ereignis 1a zu empfangen;
RL-Einrichtung zu der Makrozelle einzuleiten, Aktualisierung des aktiven Satzes zu der UE einzuleiten, und die ID der Makrozelle in den aktiven Satz hinzuzufügen;
nach dem Empfangen der gemessenen Ereignismeldung von dem Ereignis 1a, RL-Neukonfiguration zu der Makrozelle bzw. der energieeffizienten Zelle einzuleiten und Neukonfiguration des physikalischen Kanals zu der UE einzuleiten, und Änderung der bedienenden HS-DSCH-Zelle zu implementieren, und Neukonfiguration des Funkträger zu der UE einzuleiten, und Änderung der bedienenden E-DCH-Zelle zu implementieren;
die gemessene Ereignismeldung von dem Ereignis 1d zu empfangen, und die empfangene gemessene Ereignismeldung nicht zu verarbeiten;
die gemessene Ereignismeldung von dem Ereignis 1b zu empfangen; und
Aktualisierung des aktiven Satzes für die UE einzuleiten, eine ID der energieeffizienten Zelle aus dem aktiven Satz zu löschen, und RL-Löschen zu der energieeffizienten Zelle einzuleiten, um die sanfte Übergabe zu implementieren.

## Revendications

1. Procédé de transfert progressif entre cellules entre une macrocellule et une cellule de faible puissance, effectué par un contrôleur de réseau radio, comprenant :
l'envoi (10) d'un message de commande comprenant au moins des événements multiples de commande de mesure intra-fréquence et des paramètres correspondants de chacun des événements multiples à un équipement utilisateur, UE, dans lequel les événements multiples sont définis en définissant des valeurs d'élément d'information, IE, dans des critères de rapport de mesure intra-fréquence à des valeurs différentes, et les événements multiples comprennent Evènement la, Evènement 1d et Evènement 1b ;
la réception (20) de rapports d'événements mesurés, rapportés par l'UE, des événements multiples ; et
l'exécution (30) d'un processus de transfert progressif en fonction des rapports d'événements mesurés multiples reçus, dans lequel le processus de transfert progressif comprend un transfert progressif d'une macrocellule à une cellule de faible puissance ou un transfert progressif d'une cellule de faible puissance à une macrocellule ;
**caractérisé en ce que** l'exécution du processus de transfert progressif de la macrocellule à la cellule de faible puissance comprend :
la réception du rapport d'événement mesuré de l'Evènement 1a ;
le lancement d'un établissement de liaison radio, RL, pour la cellule de faible puissance, le lancement d'une mise à jour d'ensemble actif pour l'UE, et l'ajout d'une identité, ID, de la cellule de faible puissance dans un ensemble actif ;
la réception du rapport d'événement mesuré de l'Evènement 1d ;
l'envoi de l'Evènement 1b et des paramètres correspondants à l'UE ;
la réception du rapport d'événement mesuré de l'Evènement 1b ;
après la réception du rapport d'événement mesuré de l'Evènement 1b, le lancement d'une reconfiguration de RL respectivement pour la macrocellule et la cellule de faible puissance, et le lancement d'une reconfiguration de canal physique pour l'UE, et la mise en oeuvre d'un changement de cellule de desserte de canal partagé de liaison descendante haut débit, HS-DSCH, et le lancement d'une reconfiguration de porteuse radio pour l'UE, et la mise en oeuvre d'un changement de cellule de desserte de canal dédié amélioré, E-DCH ;
le lancement d'une mise à jour d'ensemble actif pour l'UE, la suppression d'une ID de la macrocellule de l'ensemble actif, et le lancement d'une suppression de RL pour la macrocellule ; et
l'envoi de l'Evènement la et des paramètres correspondants à l'UE pour mettre en oeuvre le transfert progressif ;
et **en ce que** l'exécution du processus de transfert progressif de la cellule de faible puissance à la macrocellule comprend :
la réception du rapport d'événement mesuré de l'Evènement la ;
le lancement d'un établissement de RL pour la macrocellule, le lancement d'une mise à jour d'ensemble actif pour l'UE, et l'ajout de l'ID, de la macrocellule dans l'ensemble actif ;
après la réception du rapport d'événement mesuré de l'Evènement 1a, le lancement d'une reconfiguration de RL respectivement pour la macrocellule et la cellule de faible puissance, et le lancement d'une reconfiguration de canal physique pour l'UE, et la mise en oeuvre du changement de cellule de desserte de l'HS-DSCH, et le lancement d'une reconfiguration de porteuse radio pour l'UE, et la mise en oeuvre d'un changement de cellule de desserte de l'E-DCH ;
la réception du rapport d'événement mesuré de l'Evènement 1d et le non-traitement du rapport d'événement mesuré reçu ;
la réception du rapport d'événement mesuré de l'Evènement 1b ; et
le lancement d'une mise à jour d'ensemble actif pour l'UE, la suppression d'une ID de la cellule de faible puissance de l'ensemble actif, et le lancement d'une suppression de RL pour la cellule de faible puissance pour mettre en oeuvre le transfert progressif.

2. Procédé de transfert progressif entre cellules selon la revendication 1, dans lequel, quand un transfert de la macrocellule à la cellule de faible puissance est mis en oeuvre, une constante de plage de rapport R1a et un paramètre de retard H1a de l'Evènement la sont définis pour être les mêmes que des paramètres d'un transfert progressif entre macrocellules ; et un paramètre Use CIO de l'Evénement 1d est défini pour être VRAI, et un paramètre de retard H1d est le même qu'un paramètre de retard d'un transfert progressif entre les macrocellules.

3. Procédé de transfert progressif entre cellules selon la revendication 2, dans lequel, dans le processus de transfert progressif de la macrocellule à la cellule de faible puissance, une constante de plage de rapport R1b=0 et un paramètre de retard H1b=0∼2dB correspondant à l'Evènement 1b sont envoyés à l'UE, et une constante de plage de rapport R1a=0 et un paramètre de retard H1a=0∼2dB correspondant à l'Evènement la sont envoyés à l'UE.

4. Procédé de transfert progressif entre cellules selon la revendication 1, dans lequel, quand un transfert de la cellule de faible puissance à la macrocellule est mis en oeuvre, la constante de plage de rapport R1a de l'Evènement la est 0 et le paramètre de retard H1a de l'Evènement la est 0∼2dB ; un paramètre Use CIO de l'Evènement 1d est défini pour être VRAI, et le paramètre de retard H1d de l'Evènement 1d est le même qu'un paramètre d'un transfert progressif entre les macrocellules ; et une constante de plage de rapport R1b de l'Evènement 1b est A+(R1a-H1a/2) et un paramètre de retard H1b de l'Evènement 1b est 0, dans lequel une grandeur de A est régulée, et R1a et H1a sont des paramètres de transfert progressif entre une macrocellule et une macrocellule.

5. Contrôleur de réseau radio pour mettre en oeuvre un transfert progressif entre cellules entre une macrocellule et une cellule de faible puissance, comprenant :
un composant de transmission configuré pour envoyer un message de commande comprenant au moins des événements multiples de commande de mesure intra-fréquence et des paramètres correspondants de chacun des événements multiples à un équipement utilisateur, UE, dans lequel les événements multiples sont définis en définissant des valeurs d'élément d'information, IE dans des critères de rapport de mesure intra-fréquence à des valeurs différentes, et les événements multiples comprennent Evènement 1a, Evènement 1d et Evènement 1b ;
un composant de réception configuré pour recevoir des rapports d'événements mesurés, rapportés par l'UE, des événements multiples ; et
un composant d'exécution configuré pour exécuter un processus de transfert progressif en fonction des rapports d'événements mesurés multiples reçus, dans lequel le processus de transfert progressif comprend un transfert progressif d'une macrocellule à une cellule de faible puissance ou un transfert progressif d'une cellule de faible puissance à une macrocellule ; **caractérisé en ce que** quand le transfert progressif d'une macrocellule à une cellule de faible puissance est exécuté, le contrôleur de réseau radio est configuré pour :
recevoir le rapport d'événement mesuré de l'Evènement la ;
lancer un établissement de liaison radio, RL, pour la cellule de faible puissance, en lançant une mise à jour d'ensemble actif pour l'UE, et ajouter une identité, ID, de la cellule de faible puissance dans un ensemble actif ;
recevoir le rapport d'événement mesuré de l'Evènement 1d ;
envoyer l'Evènement 1b et les paramètres correspondants à l'UE ;
recevoir le rapport d'événement mesuré de l'Evènement 1b ;
après la réception du rapport d'événement mesuré de l'Evènement 1b, lancer une reconfiguration de RL respectivement pour la macrocellule et la cellule de faible puissance, et lancer une reconfiguration de canal physique pour l'UE, et mettre en oeuvre un changement de cellule de desserte de canal partagé de liaison descendante haut débit, HS-DSCH, et lancer une reconfiguration de porteuse radio pour l'UE, et mettre en oeuvre un changement de cellule de desserte de canal dédié amélioré, E-DCH ;
lancer une mise à jour d'ensemble actif pour l'UE, supprimer une ID de la macrocellule de l'ensemble actif, et lancer une suppression de RL pour la macrocellule ; et
envoyer l'Evènement la et les paramètres correspondants à l'UE pour mettre en oeuvre le transfert progressif ;
quand le transfert progressif d'une cellule de faible puissance à une macrocellule est exécuté, le contrôleur de réseau radio est configuré pour :
recevoir le rapport d'événement mesuré de l'Evènement la ;
lancer un établissement de RL pour la macrocellule, lancer une mise à jour d'ensemble actif pour l'UE, et ajouter l'ID de la macrocellule dans l'ensemble actif ;
après la réception du rapport d'événement mesuré de l'Evènement 1a, lancer une reconfiguration de RL respectivement pour la macrocellule et la cellule de faible puissance, et lancer une reconfiguration de canal physique pour l'UE, et mettre en oeuvre l'HS-DSCH, et lancer une reconfiguration de porteuse radio pour l'UE, et mettre en oeuvre le changement de cellule de desserte de l'E-DCH ;
recevoir le rapport d'événement mesuré de l'Evènement 1d et ne pas traiter le rapport d'événement mesuré reçu ;
recevoir le rapport d'événement mesuré de l'Evènement 1b ; et
lancer une mise à jour d'ensemble actif pour l'UE, supprimer une ID de la cellule de faible puissance de l'ensemble actif, et lancer une suppression de RL pour la cellule de faible puissance pour mettre en oeuvre le transfert progressif.
